# EUROPEAN PATENT APPLICATION

(11) **EP 4 483 691 A1**
(43) Date of publication of application: **01.01.2025**
(21) Application number: 24184696.3
(22) Date of filing: 26.06.2024
(51) Int. Cl.: A01B 45/00, A01G 20/43, E01H 1/05, A46B 9/06, E01C 19/20

(54) **GROUND ENGAGING BRUSH APPARATUS**

(30) Priority: 27.06.2023 GB 202309699
(71) Applicant: Greentek Solutions Ltd, Leeds West Yorkshire LS23 7AU (GB)
(72) Inventor: OLIVER, Marcus, Leeds, LS23 7AU (GB); ELLIS, Ian, Leeds, LS23 7AU (GB)
(74) Representative: Murgitroyd & Company

(57) **Abstract**

Brush apparatus for turf having bristles mounted specifically at a frame and configured to positionally flicker as the apparatus is towed behind a mower, tractor or the like so as to be effective to flick and disperse loose debris material and specifically wormcast at the turf surface. The apparatus and arrangement is further advantageous to be useful with assisting with delivery of treatment materials to turf such as the brushing-in of topsoil dressing material (i.e. sand and the like) as well as providing turf striping for aesthetic presentation.

## Description

### Field of invention

The present invention relates to brush apparatus attachable to a mower or motorised vehicle and in particular, although not exclusively, to brush apparatus having ground engaging bristles configured to positionally flicker when the apparatus is in contact with and moved over the ground to disperse debris, loose material and/or wormcast at the ground.

### Background

Sports turf and in particular cultivated fine turf such as golf greens and fairways require very regular maintenance both to maintain the soil and intended grass quality. It is common practice to brush the grass for many reasons such as the application of levelling sand or topsoil, to help spread treatment materials into the grass and also to disperse or collect loose materials from the grass surface. Specifically, golf course fine turf dressing is typically achieved with a brush unit that is towed behind a tractor with the brush unit comprising multiple brush bristles that sweep across the grass for both turf treatment (by introducing turf treatment materials) or manicuring to remove loose debris and/or encourage the blades of grass to sit together uniformly so as to create grass stripes and the like.

US 5,833,013 A discloses a brush for grooming golf greens and fairways in which brush heads are mounted at a frame that may be towed behind a tractor or mower device.

GB 2248757 A describes a ground surface treatment system that includes a framework carrying a rotatable spiking tool and a number of additional ground effect tools that may include a rake, a brush, a roller.

US 11,641,815 B2 describes a method of removing debris from an area of turf grass that includes a rotatably mounted brush and a comb having comb teeth to engage and remove debris at the grass surface as the rotating brush travels in contact with the turf.

A further specific challenge with maintaining sports turf is the increasing propensity of wormcast. Although worms are beneficial to the soil, their casts are severely detrimental to culturing fine turf. Since the use of worm control chemicals such as Carbendazim has been phased-out, golf course greenkeepers have struggled with the effects of wormcasts which when prolific will tend to smother the grass plants causing them to die back. Also, wormcasts have a detrimental effect on grass mowers (used to cut golf fairways and greens) because the cast material is abrasive and blunts the cutting blades, necessitating regular resharpening at substantial cost and inconvenience. Furthermore, wormcast material adheres to mower rollers and accumulates to the extent that the rollers increase in diameter resulting in grass being mown to a longer length than intended. To attempt to address this and in particular to try and maintain the correct height of cut, an operator is required to regularly stop the mower and manually scrape the wormcasts from the rollers.

Some attempts by greens staff to disperse wormcasts have involved existing turf brushes. However, this has not been successful as the effect of sweeping with either a static brush or a powered rotary brush is to sweep the wormcasts across the turf surface and smear the worm deposits into the turf causing undesirable muddy streaks on the turf. Accordingly, there is a need for ground and in particular turf treatment apparatus to address the above problems.

### Summary of the Invention

It is an objective of the present concept to provide turf brush apparatus attachable to a mower or motorised vehicle such as a tractor to be towed or pushed in engaging contact with the ground and to at least partially disperse or remove debris at the turf surface. It is a further specific objective to provide a method and brush apparatus to at least partially disperse wormcasts deposited at the surface of cultivated fine turf.

The objectives are achieved according to the present concept by providing brush apparatus having bristles mounted at a frame and configured specifically with bristle tips capable of positionally flickering at/immediately over the ground as the apparatus is moved over the ground in front of or behind a mower, tractor or the like so as to be effective to flick and/or at least partially disperse loose debris deposited material and specifically wormcast or other mud deposits at the turf surface. Such flickering encompasses a motion in which the bristles may be considered to flicker, flutter, vibrate, shudder or twitch. Such motion has been found to be effective to shatter and disperse wormcasts.

The present arrangement is further advantageous to be useful to assist delivery of treatment materials to the turf such as the brushing-in of topsoil dressing material (i.e. sand and the like) as well as providing turf striping for aesthetic presentation.

The present brush apparatus comprises bristles (mounted at a frame) having a predefined thickness, length and bristle mounting density (at the frame) to provide specifically the bristle tip positional flickering motion that the inventors have determined through extensive development and testing. In particular the inventors have identified a synergy between the desired thickness, length and bristle mounting density, as described and claimed herein, to provide the advantageous oscillatory motion of the bristle tips at the ground surface.

In particular, and according to a first aspect of the present concept there is provided brush apparatus attachable to a mower or motorised vehicle to be pulled or pushed in ground engaging contact and comprising: a frame having a front end for positioning forwards in relation to a direction of travel and relative to a rear end, with lateral sides extending between the front and rear ends; a plurality of ground engaging bristles having respective lengths that extend downwardly from the frame and have respective ground engaging tips; a plurality of ground engagers mounted at the frame such that the tips of the bristles are positioned at a separation distance from the frame approximately equal to a separation distance between the frame and a region or surface of the ground engager positioned furthest from the frame such that the bristles may be provided in contact or near touching contact with the ground; wherein a thickness of the bristles perpendicular to their respective lengths is within a range 1.3 to 4.0 mm; wherein the bristles are mounted at the frame such that a density by which the bristles are mounted and extend from a bristle mount surface at the frame is in a range 400 to 1200 bristles per 100 cm²; wherein a length of the bristles is in within the range 120 to 300 mm.

Reference within this specification to bristle length is defined as the distance between a bristle first end positioned generally coplanar with a mount surface from which the bristles extend and a second unsecured (positionally free) end, formed as a bristle tip and configured to be ground engaging. Reference within this specification to a bristle thickness, encompasses a width or diameter laterally across each bristle for example at a cross section of each bristle. According to further embodiments, each bristle comprises a uniform thickness along each respective length. Reference herein to a bristle mounting density encompasses a value (or range) being the number of bristles (and in particular bristle lengths) that extend from each bristle mount surface per 100 cm² (as measured at the bristle mount surface). This bristle surface area includes the surface area occupied by each of the bristles and also including any free surface regions unoccupied by and positionally between the bristles. Reference within the specification to a quantitative value or range including in particular reference to a bristle length, width, diameter and/or bristle mounting density may be reference to an average, where the average is a mean average of for example the bristle width or length as calculated based on the sum of such parameters for all bristles forming part of the apparatus divided by the total number of bristles provided at the apparatus.

Preferably, the apparatus further comprises at least one bristle mount provided at the frame, a bristle mount surface provided at the bristle mount, the bristles mounted and extending from the bristle mount surface. Optionally, each bristle mount is provided as a block and an elongate rectangular cuboid block having a length being many multiples of a block width. Optionally, each bristle mount is provided as a polymer, rubber or resiliently deformable material into which the bristles may be mechanically and physically embedded. Optionally, at least one bristle mount comprises a wooden and/or metal material. Optionally, each of the bristles may comprise a nylon or a polypropylene material. As will be appreciated, alternative synthetic, natural or part synthetic materials may be used.

Optionally, the bristles are mounted at the frame as at least one bristle row extending laterally across the frame between the lateral sides. Optionally, within each of the bristle rows, the bristles may be grouped or bunched together as clusters (for example comprising 10 to 100 or 20 to 80 bristle lengths) extending downwardly from the respective bristle mount surface. These clusters may define sub-rows of bristles extending along the length of each bristle mount such that seemingly a single bristle row may comprise two sub-rows. Such an arrangement would result for example where the bristles are folded at a mid-region and mechanically/physically embedded into the bristle mounts.

Preferably, each bristle row is aligned perpendicular or oblique to a lengthwise direction of the frame defined between the front and rear ends. Preferably, a plurality of bristle rows mounted at the frame, each of the bristle rows aligned generally parallel with one another.

Optionally, the frame may comprise a main unit and at least one lateral side unit mounted at the main unit via at least one folding or pivoting attachment to allow the at least one side unit to be moved between a position located laterally outward from at least one of the lateral sides of the frame so as to extend an overall width of the frame and a position located substantially within a perimeter of the main unit.

Optionally, the bristles at the at least one lateral side unit extend downwardly form the frame to contact the ground when the at least one lateral side unit is positioned substantially within the perimeter of the main unit.

Optionally, the frame may comprise a unitary structure and does not comprise any folding or hinging/pivoting frame regions. Optionally, the frame comprises multiple frame units to form a modular frame assembly capable of being pulled behind or pushed in front of a mower or vehicle. The present concept is suitable for use with such single frame or multi-section frame assemblies. Preferably where the present concept comprises multiple frame units, each of the frame units comprise the bristle configuration as claimed and described herein. In particular and preferably, the main unit and the at least one lateral side unit each comprise a plurality of the bristles. Preferably, the bristles at the main unit and the lateral side units are arranged as rows, each of the rows extending generally perpendicular or oblique to a lengthwise direction of the frame as defined between the front and rear ends.

Optionally, where the frame comprises a main unit and at least one lateral side unit, the main unit comprises a plurality of wheels and each lateral side unit comprises at least one wheel.

Reference within the specification to ground engagers encompasses a static or rotary body and/or assembly configured to mechanically support and suspend the frame above the ground, with a first end or region of the ground engagers configured to contact the ground and further region of the ground engagers being mounted at the frame. Optionally, the ground engagers may comprise wheels, skids, skis and the likes. Optionally, the ground engagers comprise wheels. Optionally, the wheels may comprise castors having a respective ground engaging castor wheel mounted at a respective wheel hub and attached to the frame via a pivot mounting to allow the castor wheel to pivot. Such pivoting may be via a generally vertical axis. Optionally, the wheels may comprise rollers or other ground engaging means to enable the apparatus to be pushed or towed and to be positionally free standing at the ground when decoupled from a prime mover such as a tractor or mower. Optionally, where the frame comprises multiple modular sections including a main unit and at least one lateral side unit, the ground engagers are mounted at the front end, the rear end and/or the lateral sides of the frame.

Preferably, the apparatus comprises a height adjustment mechanism provided at the frame, each wheel hub and/or each pivot mounting to adjust a separation distance between the wheels and the frame.

Optionally, a cross-sectional area of each bristle may be in a range 1.4 to 12.5 mm², 1.4 to 10.5 mm², 1.4 to 8.0 mm², 1.6 to 7.5 mm² or 1.6 to 7.2 mm². Optionally, a length of the bristles may be in a range 140 to 280 mm, 160 to 240 mm, 170 to 210 mm or preferably 180 to 200 mm. Optionally a thickness (e.g., width or diameter) of each bristle may be in the range 1.3 to 4.0, 1.3 to 3.6, 1.3 to 3.2 or 1.3 to 3.2, or 1.5 to 3.0. Such a thickness may be the maximum thickness across a cross section. Such a thickness may be an average thickness of a single bristle, where there may be variation of thickness along a bristle length, and/or an average calculated based on all or the majority of bristles forming part of the present concept.

Optionally, the frame front end is configured for positioning in contact with and closest to a mower or vehicle when the present apparatus is configured to be pulled. Alternatively, a rear end of the frame may be configured for attachment to a mower or vehicle so that the present concept may be pushed. In all configurations, the front end is always positioned forward with regard to the direction of travel of the present concept relative to a rear end of the frame.

According to a further aspect of the present concept there is provided a method of brushing a region of ground with brush apparatus comprising: attaching a frame of the apparatus to a mower or motorised vehicle; providing a plurality of bristles extending downwardly from the frame, each bristle having a ground engaging tip and wherein the bristles comprise a thickness in a range 1.3 to 4.0 mm, a length in a range 120 to 300 mm and are mounted at the frame such that a density by which the bristles are mounted at and extend from a bristle mount surface at the frame is in a range 400 to 1200 bristles per 100 cm²; suspending the bristles at the frame and relative to the ground via a plurality of ground engagers; and pushing or pulling the brush apparatus over the ground using a mower or motorised vehicle such that the tips of the bristles are maintained in generally touching contact with the ground and are capable of positionally flickering to be effective to flick and at least partially disperse debris at the surface of the ground.

Optionally, the method further comprises mounting the bristles at the frame via at least one bristle mount provided at the frame, a bristle mount surface provided at the bristle mount and the bristles mounted and extending from the bristle mount surface. Preferably, the method comprises adjusting a separation distance between the ground engagers and the frame via at least one height adjustment mechanism to adjust a separation distance between each bristle tip and the frame.

According to a further aspect of the present concept there is provided brush apparatus attachable to a mower or motorised vehicle to be pulled or pushed in ground engaging contact and comprising: a frame having a front end for positioning forwards in relation to a direction of travel of the present concept relative to a rear end, with lateral sides extending between the front and rear ends; a plurality of ground engaging bristles having respective lengths that extend downwardly from the frame and have respective ground engaging tips; a plurality of wheels mounted at the frame; wherein: a thickness of the bristles perpendicular to their respective lengths is within a range 1.3 to 4.0 mm; the bristles are mounted at the frame such that a density by which the bristles are mounted and extend from a bristle mount surface at the frame is in a range 400 to 1200 bristles per 100 cm²; and/or a length of the bristles is in within the range 120 to 300 mm.

Optionally, the present apparatus may be attachable to the front or rear of a vehicle or mower so as to be pushed or pulled. Accordingly, suitable attachments may be provided at the front or rear of the apparatus to allow the apparatus to be interchangeably mounted at the front or rear of a vehicle or mower. Optionally, the present apparatus may comprise a single coupling exclusively at a front end of the apparatus or exclusively a rear coupling at a rear end of the apparatus for attachment to a respective vehicle or mower.

### Brief description of drawings

A specific implementation of the present invention will now be described, by way of example only, and with reference to the accompanying drawings in which:
Figure 1 is a perspective view of brush apparatus attachable to a mower or motorised vehicle and configured to be pulled behind the prime mover in ground engaging contact so as to provide a brushing action to turf and the like according to a specific implementation of the present concept;
Figure 2 is a side perspective view of a lateral endmost part of the brush apparatus of figure 1;
Figure 3 is a perspective view from above at the lateral side region of the brush apparatus of figure 2;
Figure 4 is a side elevation view of a plurality of brush bristles of the apparatus of figure 1 extending downwardly into ground engaging contact;
Figure 5 is a side perspective view of the brush apparatus of figure 1 in use and being pulled in ground engaging contact behind a prime mover.

### Detailed description of preferred embodiment of the invention

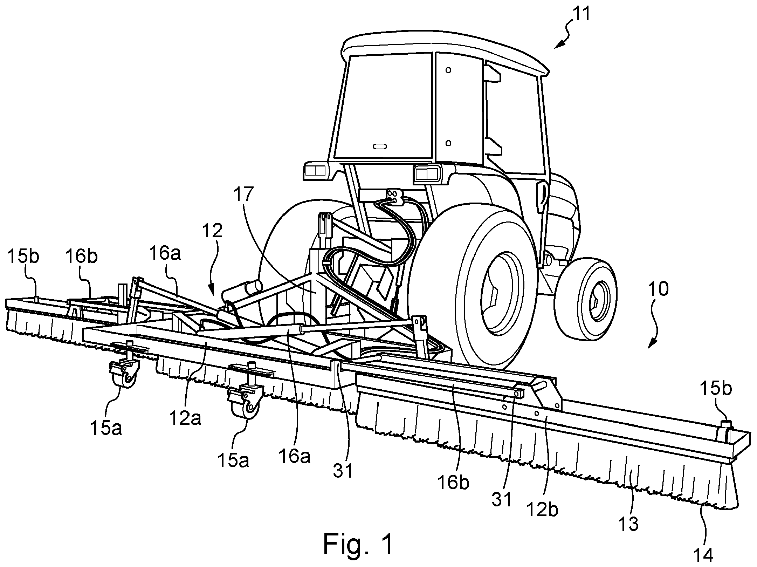

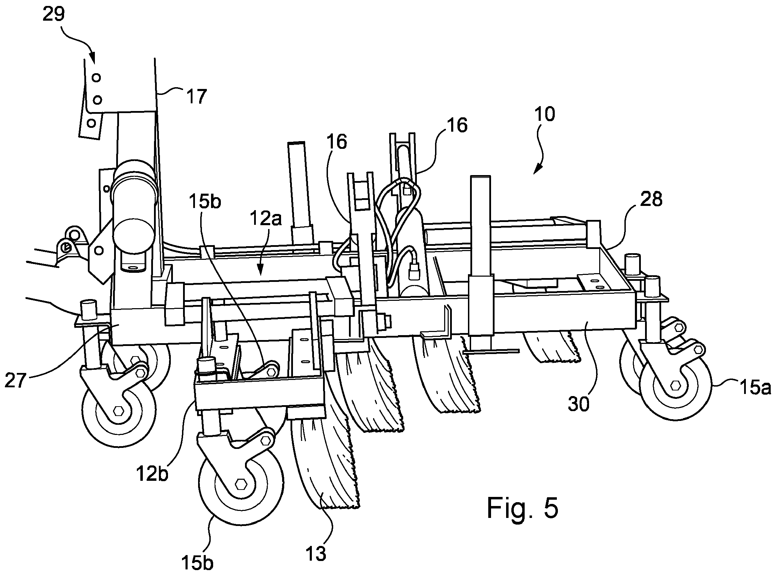

Referring to figure 1, the present brush apparatus 10 comprises a frame indicated generally by reference 12. According to the specific implementation, frame 12 is modular and formed from mechanically interconnected frame units including a main unit 12a and two lateral side units 12b. Each side unit 12b is capable of extending laterally outward to each lateral side of main unit 12a. Apparatus 10 further comprises a linkage or coupling 17 to attach frame 12 to a prime mover such as tractor 11 and to allow apparatus 10 to be towed so as to provide the brushing action to turf over which the apparatus 10 is towed. Linkage 17 comprises a frame part extending upwardly from main unit 12a and comprising suitable linkage mechanisms 29 (figure 5) suitable for attachment to one or a plurality of different types of prime mover (tractor 11) including other mobile devices such as mowers, motor vehicles, manually driven or automated vehicles.

Each lateral side unit 12b is mechanically attached to main unit 12a via respective adjustable linkage mechanisms comprising specifically a support member 16b attached at a first end to lateral side unit 12b via a pivot mounting 31 and attached at a second end to main unit 12a via a further pivot mounting 31. An actuating ram 16a (controlled manually and/or electronically, pneumatically and/or hydraulically) extends from main unit 12a to each respective side unit 12b so as to control a deployment of each lateral side unit 12b to the position as shown in figure 1 relative to a fully retracted position in which each lateral side unit 12b is pivoted to fall inwardly. In such a fully folded (or compact) configuration, each lateral side unit 12b is pivoted via pivot mountings 31 to bring each lateral side unit 12b into the perimeter of main unit 12a. In such a configuration, apparatus 10 comprises a much-reduced lateral width. As illustrated in figure 5, apparatus 10 and in particular main unit 12a comprises a forward or front end 27, a corresponding rear end 28 and a pair of parallel lateral sides 30 extending in a lengthwise direction between ends 27, 28. Coupling linkage 29 is mounted at main unit front end 27 as part of the coupling mechanism 17 by which apparatus 10 is connected to tractor 11.

Referring again to figure 1, each frame unit 12a, 12b comprises at least one ground engaging wheel. In particular, main unit 12a, comprises four wheels 15a, a rear pair provided at rear end 28 and a front pair provided at front end 27. Each lateral side unit 12b comprises a pair of wheels 15b, a first wheel mounted at or towards a lateral outmost end of unit 12b with the second wheel 15b mounted at or towards a lateral innermost end of unit 12b. Accordingly, each unit 12a, 12b is mounted in relatively stable mounting position directly above the ground and to be capable of being pulled behind tractor 11 as a mobile towed arrangement.

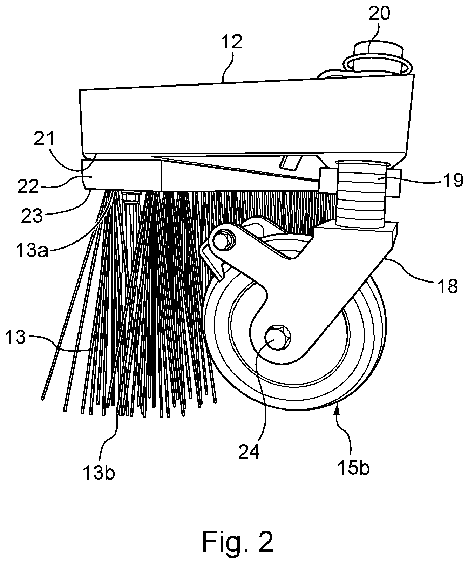

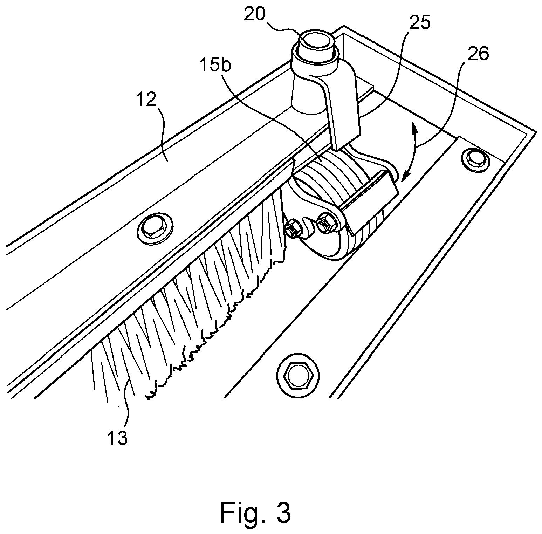

According to the present embodiment, each wheel 15a, 15b is provided as a castor, illustrated further in figures 2 and 3. Each castor comprises a hub 18 wherein each wheel 15a, 15b is mounted at each respective hub 18 via an axle 24. Each hub 18 is coupled to each unit 12a, 12b via a height adjustable mounting arrangement. In particular, a post 19 extends generally vertically between hub 18 and frame 12. An adjustment mechanism 20 cooperates with post 19 so as to adjust a separation distance between hub 18 (and in particular each wheel 15a,b) and frame 12. Such an arrangement provides manual or automated adjustment of the separation distance of frame 12 relative to the ground. In particular, each castor is configured to pivot about an axis of each post 19 to allow each wheel 15a, 15b to swivel and self-align with the direction of travel of the apparatus 10 over the ground in direct response the turning action of tractor 11. The castor arrangements at each lateral side unit 12b also comprise respective movement limiter arms 25 (mounted at each respective post 19). Each limiter arm 25 restricts the angular pivoting range 26 of each lateral side castor 15b.

Each frame unit 12a, 13b comprises a plurality of ground engaging bristles 13 that extend (indirectly) downwardly from an underside surface 21 of frame 12. In particular, each of the bristles 13 is respectively mounted at a bristle mount 22 formed as an elongate block. According to the specific embodiment, each lateral side unit 12b comprises two bristle mounts 22 a first positioned towards a front end and a second positioned towards a rear end of each unit 12b relative to the lengthwise direction of the apparatus as defined between frame front and rear ends 27, 28. Main unit 12b also comprises a pair of bristle mounts 22 extending laterally between lateral sides 30. According to the specific embodiment bristle mounts 22 are positioned in the lengthwise direction towards a mid-region of main unit 12a relative to front and rear ends 27, 28. Bristles 13 extend downwardly from each of the respective bristle mounts 22. Each bristle mount 22 is attached to frame underside surface 21 via suitable mechanical attachments (nut and bolt). Optionally, each bristle mount 22 may be adjustably mounted at frame 12 via at least one adjustable mounting to provide further independent adjustment of a vertical position of each bristle mount 22 relative to frame 12 and/or the ground. Bristles 13 are arranged in discreet bristle rows as mounted at each bristle mount 22 and extending laterally across frame 12 in a directly aligned generally perpendicular to a main length of the apparatus and in particular the lengthwise direction of frame 12 between front and rear ends 27, 28. Via the folding arrangement of figure 1, the bristle rows are provided in slightly overlapping position in the lateral direction such that the bristles extend continuously across the full lateral width of apparatus 10 between the respective lateral outermost ends, defined by the outermost ends of each lateral unit 12b.

According to the specific embodiment, the bristles 13 are mounted at each bristle mount 22 via embedding at least a portion of the bristle 13 into the body of bristle mount 22. Each bristle 13 is formed as an elongate polymer strand, cord or straw. The strands may be folded in half and then mechanically embedded into bristle mount 22 at the fold region so as to create seemingly two bristles 13 extended downwardly from bristle mount 22. In particular, each bristle 13 comprises a first lengthwise end 13a positioned coplanar with a downward facing underside surface 23 of bristle mount 22. Each bristle 13 also comprises a corresponding second end 13b formed as a tip and positionally suspended in touching contact with the ground. As will be appreciated, the height setting of frame 12 relative to ground is determined by adjustment of the respective castors via adjustment mechanism 20. This ensures the bristle tips 13b are provided in a proximate ground engaging contact such that each bristle 13 is not bent or caused to deform in its lengthwise direction that would otherwise result from a main length of each bristle 13 being greater that the separation distance between underside surface 23 and the ground. That is, the height adjustment mechanism 20 is adjustably set to specifically position bristle tips 13b in *'light'* (or just)touching contact with the ground.

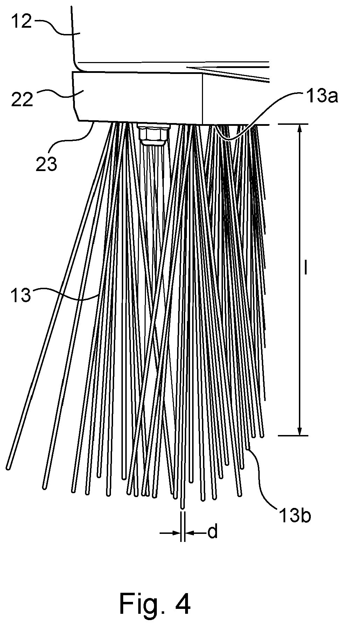

Referring to figure 4, each bristle 13 comprises main length l extending between first end 13a (positioned at underside surface 23) and second end 13b in light touching contact with the ground. According to the specific embodiment, each bristle 13 comprises length / in a range 170 to 210 mm and preferably 180 to 200 mm. Additionally, each bristle 13 comprises a generally circular or oval cross-sectional profile. A diameter or maximum width d of each bristle 13 (at a cross section) is in a range 1.3 to 4.0 mm and preferably 1.5 to 3.0 mm. Additionally, a cross-sectional area of each of the bristle may be in a range 1.5 to 7.3 mm² and preferably 1.7 to 7.1 mm². Additionally, and according to the present embodiment, a mounting density by which the bristles 13 are attached to each respective bristle mount 22 is in a range 600 to 1000 bristles per 100 cm². Put another way, according to the present concept apparatus 10 may comprise between 600 to 1000 bristles extending downwardly from a respective 100 cm² portion of underside surface 23. Such a configuration provides a relative *'open'* density of bristles at surface 23 such that regions of the surface 23 are provided as unoccupied or open-space regions between the bristles. Where the bristles 13 are arranged as groups or bunches at surface 23, the mounting density is consistent with the range 600 to 1000 bristles per 100 cm² with sufficient open or free surface area regions at surface 23 not occupied by bristles 13.

Referring to figure 5, with the bristles 13 and in particular tips 13b provided in *'light'* touching contact with the ground, as apparatus 10 is towed behind tractor 11, blades of grass extending upwardly from the turf as well as any thatch, cause the bristles 13 to bend slightly along their length. However such bending is limited/minimised and carefully controlled but the respective height adjustment of wheels 15a,b. The respective bristle lengths l, the bristle thicknesses *d* (and cross-sectional areas) and bristle mounting density (at surface 23) force tips 13b into light ground engaging contact with a low or slight force. However, as the ground engaging contact is carefully set and maintained, as the apparatus 10 is towed behind the tractor 11 as illustrated in figure 5, bristle tips 13b are effectively agitated by the grass and thatch to positionally flicker (move laterally about an imaginary axis of each bristle when static). This *'flickering'* effect is achieved by a combination of the respective bristle thicknesses *d,* bristle length *l* and bristle mounting density.

In particular, the maximum bristle width or diameter (thickness *d*) of the bristles 13 in a range 1.5 to 3.0 mm, provides a relatively thicker and *'stiff'* bristle configuration. This stiffness provides a required resilience to bending which contributes to the positional agitation action (bristle flicker) as the bristles are brushed across the ground (and grass) surface. The bristle packing density being relatively *'open*' as described herein enables sufficient volumes of grass blades to pass between the bristle which would otherwise not be possible were the bristles to be bunched together tightly - resulting in the bristles forming a collective block which would eliminate or significantly suppress any positional freedom of each bristle to provide the desired positional flicker (flutter, vibration, shudder, twitch) action. The bristle length *l,* as described herein, is advantageous to function cooperatively and synergistically with the individual bristle thickness and mounting density. In particular, the desired bristle length *l* provides each bristle with sufficient lengthwise flex (bending in the lengthwise direction of each bristle). As will be appreciated, much shorter length bristles would be resistant to lengthwise flexing/bending which would again eliminate or significantly suppress any individual bristle movement and in particular the desired bristle flicker.

Accordingly, the present concept and in particular bristle configuration and bristle mounting arrangement is configured to enable each bristle tip 13b to twitch in all directions (forwardly, rearwardly, laterally) as the brush apparatus is moved over turf. This rapid flicking motion is specifically advantageous to flick debris from the ground including for example loose soil, semi-compacted soil, stones, pebbles, wood and other loose debris sitting on top of or at least partially embedded within the blades of grass and/or turf surface. In particular, the present concept is particularly advantageous via the present bristle configuration to provide a shattering action on wormcasts as brush apparatus 10 is passed over the ground. The flickering action of bristles 13 is effective to disperse wormcasts and specifically to avoid smearing of the wormcasts over and into the turf surface. These discreet piles of semi-compacted wormcasts soil deposits are shattered and dispersed specifically by the flickering action with the dispersed soil being scattered over an area much larger than the initial footprint of each wormcast.

The present concept may be utilised with manual or automated and mechanised folding brush arrangements as described and illustrated referring to figures 1 to 5. Equally, the present concept may be utilised with rigid and/or non-folding frame arrangements in which a bristle mounted frame is formed as a unitary body being for example a single unitary structure. According to specific embodiments, the ground engaging wheels of the present concept may be provided at any region of the bush frame including in particular the front, rear, lateral sides or inner regions of a frame or frame unit. Additionally, the present concept may comprise a plurality of rows of bristles. However, to encourage the desired flickering action, it is preferred that rows of bristles are aligned perpendicular to a main length of the present apparatus (as defined between a forward and rearward end).

## Claims

1. Brush apparatus attachable to a mower or motorised vehicle to be pulled or pushed in ground engaging contact and comprising:
a frame having a front end for positioning forwards in relation to a direction of travel and relative to a rear end, with lateral sides extending between the front and rear ends;
a plurality of ground engaging bristles having respective lengths that extend downwardly from the frame and have respective ground engaging tips;
a plurality of ground engagers mounted at the frame such that the tips of the bristles are positioned at a separation distance from the frame approximately equal to a separation distance between the frame and a region or surface of the ground engagers positioned furthest from the frame such that the bristles may be provided in contact or near touching contact with the ground;
wherein a thickness of the bristles perpendicular to their respective lengths is within a range 1.3 to 4.0 mm;
wherein the bristles are mounted at the frame such that a density by which the bristles are mounted and extend from a bristle mount surface at the frame is in a range 400 to 1200 bristles per 100 cm²;
wherein a length of the bristles is in within the range 120 to 300 mm.

2. The apparatus as claimed in claim 1 further comprising at least one bristle mount provided at the frame, a bristle mount surface provided at the bristle mount, the bristles mounted and extending from the bristle mount surface.

3. The apparatus as claimed in claim 2 wherein the bristle mount comprises a polymer, rubber, wooden and/or metal material.

4. The apparatus as claimed in any preceding claim wherein the bristles are mounted at the frame as bristle row laterally across the frame between the lateral sides; and optionally each bristle row is aligned perpendicular or oblique to a lengthwise direction of the frame defined between the front and rear ends.

5. The apparatus as claimed in any preceding claim comprising a plurality of bristle rows mounted at the frame, each of the bristle rows aligned generally parallel with one another.

6. The apparatus as claimed in any preceding claim wherein the frame comprises a main frame unit and at least one main unit and at least one lateral side unit mounted at the main unit via at least one folding or pivoting attachment to allow the at least one side unit to be moved between a position located laterally outward from at least one of the lateral sides of the frame so as to extend an overall width of the frame and a position located substantially within a perimeter of the main unit.

7. The apparatus as claimed in claim 6 wherein:
the main unit and the at least one lateral side unit each comprise a plurality of the bristles;
at the at least one lateral side unit extend downwardly form the frame to contact the ground when the at least one lateral side unit is positioned substantially within the perimeter of the main unit; and/or
the bristles at the main unit and the lateral side units are arranged as rows, each of the rows extending generally perpendicular or oblique to a lengthwise direction of the frame as defined between the front and rear ends.

8. The apparatus as claimed in claim 7 wherein each lateral side unit comprises at least one of the ground engagers.

9. The apparatus as claimed in any preceding claim wherein each of the ground engagers comprise a castor having a respective ground engaging castor wheel mounted at a respective wheel hub and attached to the frame via a pivot mounting to allow the castor wheel to pivot about a generally vertical axis.

10. The apparatus as claimed in claim 9 comprising a height adjustment mechanism provided at the frame, each wheel hub and/or each pivot mounting to adjust a separation distance between the wheels and the frame.

11. The apparatus as claimed in any preceding claim wherein the ground engagers are mounted at the front end, the rear end and/or the lateral sides of the frame.

12. The apparatus as claimed in any preceding claim wherein:
a cross-sectional area of each bristle is in a range1.4 to 12.5 mm², 1.4 to 10.5 mm², 1.4 to 8.0 mm², 1.6 to 7.5 mm² or 1.6 to 7.2 mm²
a length of the bristles in a range 140 to 280 mm, 160 to 240 mm or 170 to 210 mm; and/or
the bristles comprise a nylon or a polypropylene material.

13. A method of brushing a region of ground with brush apparatus comprising:
attaching a frame of the apparatus to a mower or motorised vehicle;
providing a plurality of bristles extending downwardly from the frame, each bristle having a ground engaging tip and wherein the bristles comprise a thickness in a range 1.3 to 4.0 mm, a length in a range 120 to 300 mm and are mounted at the frame such that a density by which the bristles are mounted at and extend from a bristle mount surface at the frame is in a range 400 to 1200 bristles per 100 cm²
suspending the bristles at the frame and relative to the ground via a plurality of ground engagers; and
pushing or pulling the brush apparatus over the ground using a mower or motorised vehicle such that the tips of the bristles are maintained in generally touching contact with the ground and are capable of positionally flickering to be effective to flick and at least partially disperse debris at the surface of the ground.

14. The method of brushing as claimed in claim 13 further comprising mounting the bristles at the frame via at least one bristle mount provided at the frame, a bristle mount surface provided at the bristle mount and the bristles mounted and extending from the bristle mount surface.

15. The method of brushing as claimed in claim 13 or 14 comprising adjusting a separation distance between the ground engagers and the frame via at least one height adjustment mechanism to adjust a separation distance between each bristle tip and the frame.
